# EUROPEAN PATENT APPLICATION

(11) **EP 0 842 970 A1**
(43) Date of publication of application: **20.05.1998**
(21) Application number: 96118211.0
(22) Date of filing: 13.11.1996
(51) Int. Cl.: C08J 7/12, C08J 5/12

(54) **Grafted polyvinyl halide moldings**

(71) Applicant: Trespa International B.V., 6002 SM Weert (NL)
(72) Inventor: van Heeswijk, Wolfgang, 6003 CS Weert (NL)
(74) Representative: Schweitzer, Klaus, Dr.

(57) **Abstract**

The invention relates to a polyvinyl halogen molding surface which is characterized in that at least part of the surface is grafted with O-substituted oximes and/or N-substituted hydrazones. Moreover the invention relates to a process for making a graft of O-substituted oximes and/or N-substituted hydrazones on a surface of a polyvinyl halogen molding which is characterized by the steps of oxidizing the surface of the molding and reacting the oxidized surface with O-substituted hydroxylamines and/or hydrazines and/or hydrazides.

## Description

The present invention describes a chemical grafting technique of polyvinyl halogens (i.e. polyvinyl chloride (PVC) and polyvinylfluoride (PVF)) which contain carbonyl groups on its surface. Carbonyl groups on the surface of this class of polymers are introduced e.g. by surface oxidation employing well-established physical techniques in the presence of air or excess of oxygen. The latter include corona treatment and fire polishing of these polymers.

The surface of oxidized polymers are believed to contain polar groups such as hydroxy, hydroperoxide, peroxide, epoxides, ketones in linear chains and end-capped with aldehydes and carbonyl groups. It is known that surface-oxidized polyvinyl halogens will lose HX (X=Cl,F) from vicinal chloro- and fluoro-alcohols yielding epoxy groups (oxiranes, cf. epichlorohydrin formation). These oxiranes are likely to rearrange, eventually, to carbonyl groups due to the strain induced in long polymer chains and high local temperatures. Ketonic and α-β-unsaturated ketonic structures will therefore predominate on the surfaces of these polymers.

It has now been found that the surface of oxidized polyviny halogen moldings can easyly be grafted with oximes and hydrazones which in turn can be substituted. Oximes can be prepared by reacting the oxidized polyvinyl halogen with hydroxylamin or O-substituted hydroxylamins like H₂N-OR¹ (R¹= H or organic rest). Hydrazones are generated by reacting the oxidized polyvinyl halogen with hydrazines (H₂N-NR²R³; R²= H or R³; R³= organic rest) or hydrazides (H₂N-NH-(X=Oₙ)-R⁴, X= C [with n=1], S [with n=1 or 2] or P [with n=1, 2 or 3], R⁴ = organic rest).

Especially the hydrazones expand the scope of the present grafting technique. Thus, with the use of substituted acyl hydrazides (H₂N-NH-(C=O)-R⁴) a wide range of structure elements can be grafted onto at least partially oxidized polyvinyl halogens.

Primary structure elements include optionally substituted alkyl- or cycloalkyl-, optionally substituted aryl- and optionally substituted heterocyclic-groups. Secondary structure elements may range from simple organic functional groups such as alcohols, amines, quaternary ammonium salts to complex organic moieties including a wide range of chemical, biochemical and physiological elements. The commercial aspects of the invention have a wide range and include simple fine-tuning of contact angles (solid-liquid) on polyvinyl halogen moldings such as foils and sheets, the introduction of adhesion promoters or inhibitors on the surface of such polyvinyl halogen films, foils or sheets to advanced techniques such as the introduction of enzymic and/or recognition receptors, radical quenchers, or structure elements interfering with bacteria adhesion or blood clotting.

Apart from the direct derivatisation technique described above, the graft introduced directly on the surface of the molding might function as a spacer group onto which, in turn, other systems can be grafted. These systems include: polymerization initiators, polymerization inhibitors, radical quenchers, protecting and activating groups used in peptide-, carbohydrate- and (desoxy)-ribonucleic acid chemistry, recognition receptors (e.g. tumor markers), chelating groups (e.g. EDTA as a collagenase inhibitor) or even complex biomolecules that interfere with the blood clotting cascade reaction (example: heparin).

The grafting technique is performed under extremely mild conditions at or around neutral pH in aqueous or physiological salt solution at room or physiological temperatures. Thus, treatment of an oxidized polyvinyl halogen molding such as a fire polished PVF foil with an aqueous solution of adipic dihydrazide (H₂N-NHCO-(CH₂)₄-CO-NH-NH₂) yields the grafted polymer. Elemental analysis by ESCA clearly show a reduction of the fluorine content and a marked increase of nitrogen on the polymer surface. In the case of this particular hydrazide only one of the hydrazide groups reacts with the polymer whereas the other hydrazide group remains unchanged and may be used in successive reactions to incorporate further structure elements.

The examples described herein include fusion onto melamine surface and covalent binding of PVF foil on (resolic and novolack type) phenol formaldehyde resins via benzyl amino (or hydrazino) structure elements. (Aromatic nucleophilic amino methylation (Mannich reaction)). It should be stressed that these polycondensates poorly adhere to PVF which is not grafted according to the present invention.

Free hydrazides can be readily converted to azides via well established methods of peptide chemistry. These azides are known to react, in turn, with alcohols and amines to yield esters and amides, respectively.

Results obtained with the adipic monohydrazide graft of PVF which carries free carboxylic acid groups have a wide scope. These carboxylic acid groups are readily converted in reactive acyl imidazolides with the use of N,N'-carbonyl-diimidazole in dry N,N-dimethylformamide or to the more reactive saccharin imide groups in the presence of saccharin (2,3-dihydro-1,2-benzisothiazole-3-on-1,1-dioxide). These azides, imidazolides or saccharinic acid derivatives in turn smoothly react with simple amines and even complex amines such as aminoacid esters or D-glucosamine. The latter conversion (incorporation of sugar-like moieties onto PVF foil) can even be conducted under extremely mild, almost physiological aqueous conditions.

### Examples

The following chemical derivation of polyvinyl halogen foils were conducted by soaking thermally sealed thin polyester or polypropylene non-wovens with the reagents required and winding them up together with the polyvinyl halogen foil to obtain rolls, which were stored for the duration of reaction times.

### Derivation of flame-polished polyvinyl fluoride (PVF)

PVF foils were sandwiched or rolled with non-wovens, soaked with 50 % methanolic adipic dihydrazide solution (3 to 5 %) and kept for 48 hours in a closed container. In this manner both sides of the PVF foils are grafted with the hydrazide. Single-sided treatment required a more complex sandwiched structure which involved an additional PVF foil. The PVF foil was isolated and copiously rinsed with water and air-dried. ESCA technique which has the ability to sample the top 10 to 90 Å in a take-off angle of 45 degrees showed ample evidence of the presence of the hydrazide graft. Thus, the fluorine content was decreased (16.0 to 4.4 atom %), whereas the nitrogen concentration was significantly increased (from 0.77 to 2.8 Atom %). In the case of adipic acid, one expects that 4 nitrogen atoms are returned for one reacted carbonyl group. There is little change in the atomic concentration found for oxygen. In the case of this particular hydrazide, two oxygen atoms are returned for one oxygen atom of a reacted carbonyl group. Adipic monohydrazide gave similar results for fluorine and oxygen. The gain of the atomic concentration of nitrogen was somewhat reduced.

### Fusion of the adipic dihydrazide graft onto melamine resin and phenolic resins

This particular graft still contains a free hydrazide group (the other one being incorporated in the hydrazone). Melamine resin or phenolic resin impregnated sheets were covered with adipic dihydrazine-grafted PVF foil. Sandwiched structures, thus obtained, were heated in a press for 20 minutes at 150 °C at a pressure of 90 bars. The PVF-fused films on these laminates thus obtained had an excellent adhesion to both the cured melamine and phenolic resin structures. The amide-like moieties in the hydrazide, being structurally related to urea, are likely to be incorporated covalently into the melamine resin (cf. urea-melamine copolycondensates).

Likewise, amine-like structures in the hydrazide are very likely to be incorporated into phenolic resins by aminomethylation of phenolics yielding benzylhydrazine (cf. benzylamino) moieties (=Mannich products). The (resolic) phenolic resin contained sufficient amounts of free formaldehyde to give rise to Mannich products. There is a large amount of chemical evidence that these reactions occur and that, as expected, the adhesion of these polymers was very much improved as shown in both peel-test and the German "Gitterschnitt" (DIN 53 151) test that gives semiquantitive values for top coat blistering after damaging the top coat with a sharp knife. It should be stressed that these polycondensates poorly adhere to polyvinyl halogens which were not grafted according to the invention.

### Preparation of the mono benzylamido adipic acid PVF hydrazone using the acyl azide method

The adipic dihydrazide graft was covered with dilute nitrous acid, in situ generated from aqueous sodium nitrite and an equivalent amount of hydrochloric acid at 4 °C and kept in the dark for 30 minutes in a refrigerator. The acyl azide grafted PVF was then allowed to reach room temperature, rinsed with water, wiped dry with a damp cloth and immediately covered with pure benzylamine soaked polypropylene non-woven. The sandwich was kept overnight at room temperature between glass plates, soaked and washed with methanol and dried. The presence of the hydrophobic title graft was immediately evidenced by a different contact angle to water.

### Preparation of a monosaccharide graft on PVF

The dry PVF graft derived from adipic monohydrazide (bearing free carboxylic acid groups) was treated for 1 hour with a dry solution of N,N'-carbonyl-diimidazole (230 mg) and saccharin (220 mg) in N,N-dimethyl formamide (1 ml) to generate the saccharinic acid imides anticipated. The foil was wiped with a cloth and the intermediate was treated with an excess of D-glucosamine in dimethylformamide, in situ generated from its finely powered hydrochloric acid salt and an equivalent N,N,N',N'-tetra methyl guanidine in N,N-dimethyl formamide. The sandwich containing the reactants was kept overnight, wiped dry and washed copiously with water. The sugar-grafted PVF foil had a very much improved contact angle towards water demonstrating its hydrophilic nature. This method has a good reproducibility and is generally applicable. The second step in which the amine is added may also be conducted in aqueous media under virtually physiological conditions.

## Claims

1. Polyvinyl halogen molding surface characterized in that at least part of the surface is grafted with O-substituted oximes and/or N-substituted hydrazones.

2. Polyvinyl halogen molding according to claim 1 characterized in that the polyvinyl halogen is polyvinylchloride or polyvinylfluoride.

3. Polyvinyl halogen molding according to claim 1 or 2 characterized in that the molding is a sheet, foil or film.

4. A process for making a graft of O-substituted oximes and/or N-substituted hydrazones on a surface of a polyvinyl halogen molding characterized by the steps of oxidizing the surface of the molding and reacting the oxidized surface with O-substituted hydroxylamines and/or hydrazines and/or hydrazides.

5. Process according to claim 4 characterized in that the O-substituted hydroxylamine is H₂N-OR¹ with R¹ being H or an organic rest.

6. Process according to claim 4 characterized in that the hydrazine is H₂N-NR²R³ with R²= H or R³ and R³= organic rest.

7. Process according to claim 4 characterized in that the hydrazide is:
H₂N-NH-(X=Oₙ)-R⁴ with X= C [with n=1], S [with n=1 or 2] or P [with n=1, 2 or 3], R⁴ = organic rest.

8. Process according to claim 5, 6 or 7 characterized in that the substituents R¹, R², R³ and R⁴ are identical or different and are selected from the group consisting of substituted or unsubstituted alky, substituted or unsubstituted cycloalkyl, substituted or unsubstituted aryl and substituted or unsubstituted hetercyclic structures.

9. Process according to claim 5, 6 or 7 characterized in that the substituents R¹, R², R³ and R⁴ are identical or different and are selected from the group consisting of polymerization initiators, polymerization inhibitors, radical quenchers, photolabile groups, protecting and activating groups used in peptide-, carbohydrate- and (desoxy)-ribonucleic acid chemistry, chelate groups, recognition receptors, enzymic receptors, and elements interfering with bacteria adhesion or blood clotting.

10. Process according to claim 5, 6 or 7 characterized in that the substituents R¹, R², R³ and R⁴ are identical or different and are selected from the group consisting of cyclic anhydrides, lactams, amines, oxiranes or its precursors, (meth)acrylic- vinyl-, arylvinyl-, isocyanato-, urea, hydrazido and their hydroxymethylated products after formaldehyde treatment, salicyl alcohols and phenoles.
